# EUROPEAN PATENT APPLICATION

(11) **EP 3 163 077 A1**
(43) Date of publication of application: **03.05.2017**
(21) Application number: 15192509.6
(22) Date of filing: 02.11.2015
(51) Int. Cl.: F04B 33/00, F04B 41/02, F04B 53/10, F16K 17/04

(54) **AIR RESERVOIR AND PRESSURE-RELIEF DEVICE THEREOF**

(71) Applicant: Beto Engineering and Marketing Co., Ltd., Taichung City 406 (TW)
(72) Inventor: WANG, Lopin, 406 Taichung City (TW)
(74) Representative: Viering, Jentschura & Partner mbB Patent- und Rechtsanwälte

(57) **Abstract**

An air reservoir includes a reservoir body, an input unit on the reservoir body, an output unit on the reservoir body, and a pressure-relief device. The pressure-relief device has an outer tube, an inner column, an airtight member, a plug and a spring. The outer tube has a diametrically-small channel, a diametrically-large channel, a stepped wall between the diametrically-small channel and the diametrically-large channel, and a slot communicated with the diametrically-large channel. The inner column has a diametrically-small segment, a diametrically-large segment, and a stepped segment between the diametrically-small segment and the diametrically-large segment. The diametrically-small segment is received in the diametrically-small channel, while the diametrically-large segment is received in the diametrically-large channel. The inner column moves to and fro between a pressure-holding position and a pressure-relief position. The airtight member abuts against the stepped segment. The plug is inserted into the diametrically-large channel. The spring abuts and seals between the diametrically-large segment and the plug to provide a resilience that makes the inner column move toward the pressure-holding position. When the inner column is at the pressure-holding position, the airtight member abuts and seals between the stepped segment and the stepped wall, thereby preventing air leakage. When the inner column is at the pressure-relief position, the airtight member is separated from the stepped wall, thereby allowing air and water to be exhausted from the air-storage chamber through the exhaust hole.

## Description

### BACKGROUND OF THE INVENTION

### 1. Technical Field

The present invention relates to tools for bicycles, and more particularly to an air reservoir and its pressure-relief device, wherein the pressure-relief device features automatic pressure relief and manual water drain.

### 2. Description of Related Art

A traditional air pump for inflating bicycle tires requires a user's manual pumping operation to introduce air into bicycle tires, and thus the introduced air is limited in terms of pressure. However, there are bicycle tires without an inner tube that can only be inflated when pressurized air is fast filled. For this type of tires, the traditional air pump is incompetent. Therefore, an air reservoir for storing high-pressure air has been developed for convenient inflation of tubeless tires.

At places with humid environment, such Taiwan that has insular climate, the atmosphere is of high relative humidity. This means the ambient air contains a large quantity of moisture. Once air in a unit area is cooled or pressurized to a certain extent, moisture in air can condense into water. Since the foregoing air reservoir is used to store compressed air, the undesired condensation of water can happen in it.

For preventing overpressure and waterlogging therein, the known air reservoir typically has a drainage valve. Such a drainage valve is operated by a screw nut and can close to prevent pressure relief or open to allow pressure relief and water drainage. Nevertheless, the nut is manually operated on a user's determination. Once the user fails to release pressure (i.e. unscrew the nut) timely, the air reservoir is risked to overpressure or waterlogging, which may damage the components in the air reservoir and in turn shorten its service life. Besides, since the unscrewing operation takes considerable time and is less uncontrollable, it is likely that too much air escapes during pressure relief and water drain, which leads to underpressure of air inside the air reservoir.

### SUMMARY OF THE INVENTION

For solving the problem seen in the prior-art device about being incapable of automatic pressure relief and having risk of excessive air escape, the present invention provides an air reservoir that comprises: a reservoir body defining therein an air-storage chamber for storing a high-pressure air, the reservoir body having an exhaust hole that communicates the air-storage chamber with the exterior; an input unit mounted on the reservoir body for inputting external air into the air-storage chamber; an output unit mounted on the reservoir body for outputting high-pressure air in the air-storage chamber; a pressure-relief device having an outer tube, an inner column, an airtight member, a plug and a spring, the outer tube having one end formed with a diametrically-small channel axially extending inward and an opposite end formed with a diametrically-large channel axially extending inward and being communicated with the diametrically-small channel, a stepped wall being formed at where the diametrically-small channel and the diametrically-large channel adjoin each other, the outer tube being radially formed with a slot communicated with the diametrically-large channel, the outer tube having one end connected to the exhaust hole of the reservoir body, so that the exhaust hole and the diametrically-small channel are communicated with each other, the inner column having a diametrically-small segment and a diametrically-large segment connected to the diametrically-small segment, a stepped segment being formed at where the diametrically-small segment and the diametrically-large segment adjoin each other, the inner column being received in the outer tube, the diametrically-small segment being received in the diametrically-small channel, the diametrically-large segment being received in the diametrically-large channel, so that the inner column performs to-and-fro linear displacement between a pressure-holding position and a pressure-relief position upon receiving an external force, the airtight member abutting against the stepped segment of the inner column, the plug being inserted into the diametrically-large channel of the outer tube, the spring abutting between the diametrically-large segment of the inner column and the plug, so as to provide a resilient preload that makes the inner column move toward the pressure-holding position. When the inner column is at the pressure-holding position, the airtight member abuts and seals between the stepped segment of the inner column and the stepped wall of the outer tube, so as to prevent the air stored in the air-storage chamber from leaking out. When the inner column is at the pressure-relief position, the airtight member is separated from the stepped wall of the outer tube, so that air in the air-storage chamber is allowed to come out through the exhaust hole.

The present invention features ability to automatically adjust air pressure by timely pressure relief, so can effectively prevent damage to the components and lengthen the service life of the whole structure. Additionally, the present invention supports manual operation for pressure relief and water drainage, and allows fast seal, so as to avoid excessive air escape.

### BRIEF DESCRIPTION OF THE DRAWINGS

FIG. 1 is a perspective view of a first preferred embodiment of the present invention.
FIG. 2 is another perspective view of the embodiment of FIG. 1 taken from a different viewpoint.
FIG. 3 is a partial, cross-sectional view of the embodiment of FIG. 1.
FIG. 4 is another partial, cross-sectional view of the embodiment of FIG. 1.
FIG. 5 is an exploded view of some components of the embodiment of FIG. 1.
FIG. 6 is an assembled view of the components of FIG. 5.
FIGs. 7 through 10 are schematic applied views of the embodiment of FIG. 1.
FIG. 11 is an exploded view of a second preferred embodiment of the present invention.
FIG. 12 is an assembled view of the embodiment of FIG. 11.
FIGs. 13 through 15 are schematic applied views of the embodiment of FIG. 11.
FIG. 16 is a schematic applied view of another aspect of the present invention.
FIGs. 17 and 18 are schematic applied views of the embodiment of FIG. 16.

### DETAILED DESCRIPTION OF THE INVENTION

The invention as well as a preferred mode of use, further objectives and advantages thereof will be best understood by reference to the following detailed description of illustrative embodiments when read in conjunction with the accompanying drawings.

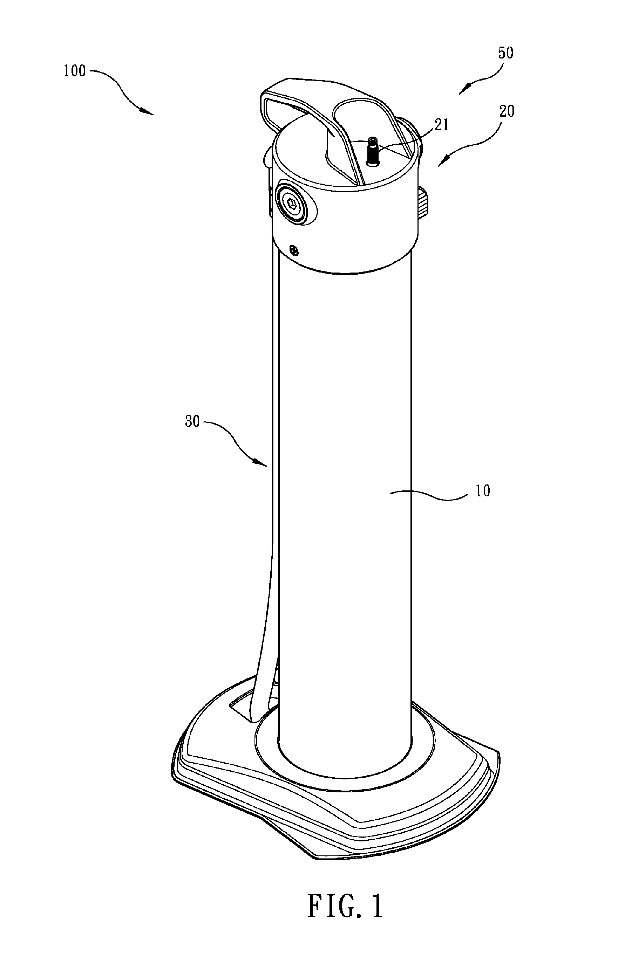

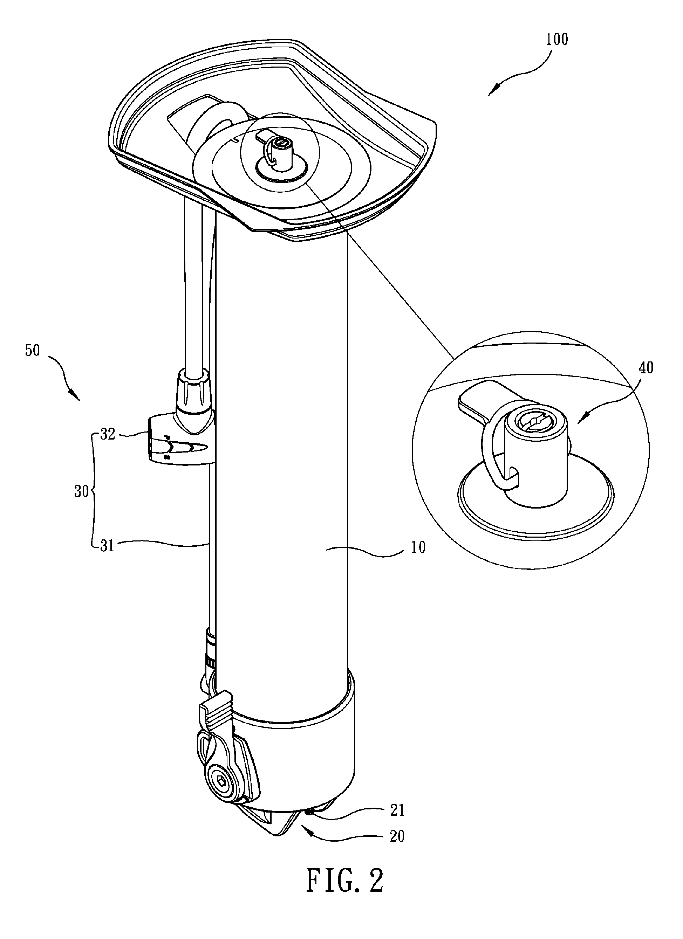

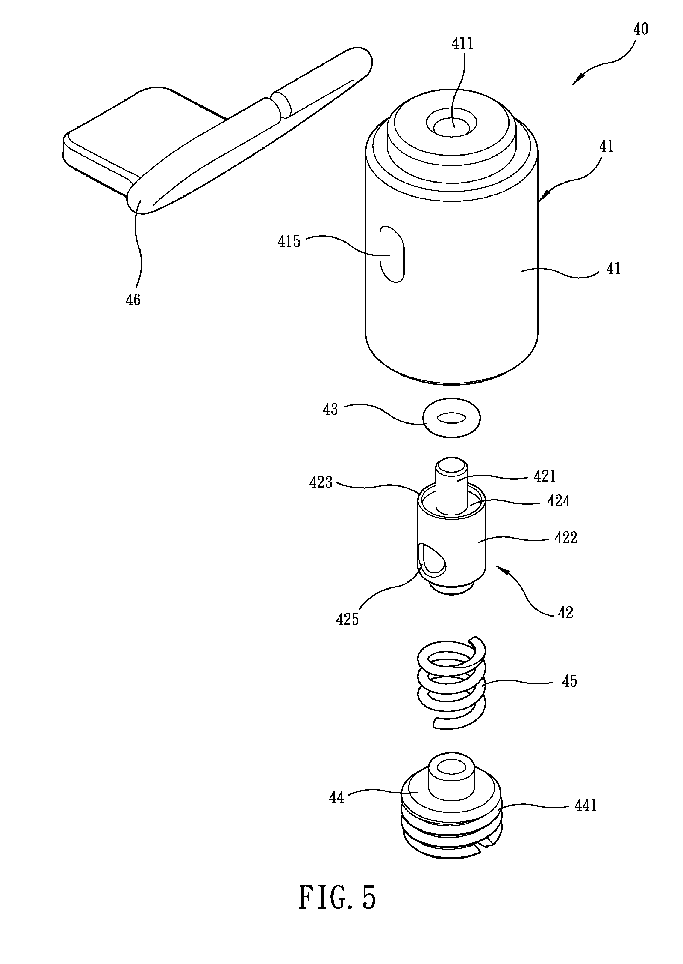

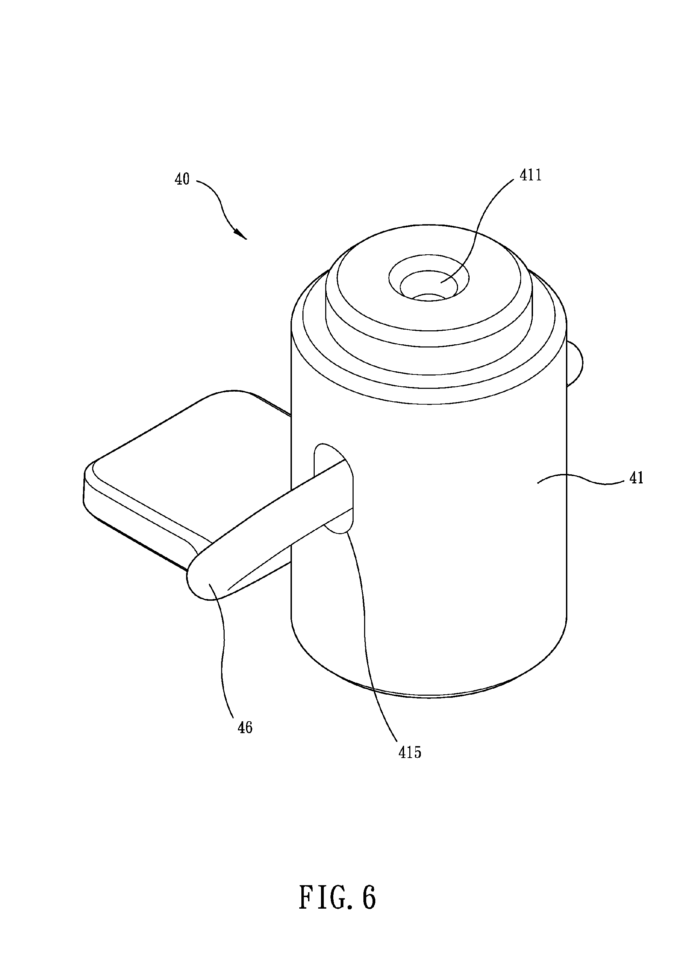

Referring to FIG. 1 through FIG. 10, according to the first preferred embodiment of the present invention, an air reservoir 100 primarily comprises a reservoir body 10, an air-supply device 50, and a pressure-relief device 40.

Referring to FIGs. 1 through FIG. 4, the reservoir body 10 defines therein an air-storage chamber 11 for storing high-pressure air. The reservoir body 10 has its bottom formed with an exhaust hole 12 that communicates the air-storage chamber 11 with the exterior.

Referring to FIG. 1 through FIG. 4, the air-supply device 50 is mounted on the reservoir body 10 for transmitting air. In the present embodiment, the air-supply device 50 has an input unit 20 and an output unit 30. The input unit 20 is mounted on the reservoir body 10 for inputting external air into the air-storage chamber 11. The input unit 20 may be a valve 21. The output unit 30 is attached to the reservoir body 10 for outputting the high-pressure air from the air-storage chamber 11. The output unit 30 includes an air pipe 31 having one end combined and communicated with the air-storage chamber 11 and an air chuck 32 connected to an opposite end of the air pipe 31.

Referring to FIG. 1 through FIG. 8, the pressure-relief device 40 is installed on the bottom of the reservoir body 10 for performing automatic pressure relief. The pressure-relief device 40 has an outer tube 41, an inner column 42, an airtight member 43, a plug 44, a spring 45, and a tab 46. The outer tube 41 has one end formed with a diametrically-small channel 411 axially extending inward and an opposite end formed with a diametrically-large channel 412 axially extending inward and being communicated with the diametrically-small channel 411. The diametrically-small channel 411 has a diameter smaller than that of the diametrically-large channel 412, so that a stepped wall 413 is formed at where the diametrically-small channel 411 and the diametrically-large channel 412 adjoin each other. At a lower part of the wall defining the diametrically-large channel 412 there is an internally threaded portion 414. The outer tube 41 is radially formed with a slot 415 communicated with the diametrically-large channel 412. The slot 415 is a lengthwise hole. The outer tube 41 has one end connected to the exhaust hole 12 of the reservoir body 10, so that the exhaust hole 12 and the diametrically-small channel 411 are communicated with each other. The inner column 42 has a diametrically-small segment 421 and a diametrically-large segment 422 coaxially connected to the diametrically-small segment 421, so that a stepped segment 423 is formed at where the diametrically-small segment 421 and the diametrically-large segment 422 adjoin each other. The stepped segment 423 has a depressed accommodating area 424. The diametrically-large segment 422 is radially formed with a receiving hole 425. The inner column 42 is received in the outer tube 41, such that the diametrically-small segment 421 is received in the diametrically-small channel 411 while the diametrically-large segment 422 is received in the diametrically-large channel 412. Thereby, when receiving an external force, the inner column 42 performs to-and-fro linear displacement between a pressure-holding position and a pressure-relief position. The airtight member 43 is an O-ring that abuts against the stepped segment 423 of the inner column 42 and is received in the accommodating area 424. The plug 44 is peripherally formed with an externally threaded portion 441. The externally threaded portion 441 is configured to engage with the internally threaded portion 414 of the outer tube 41. The spring 45 abuts and seals between the diametrically-large segment 422 of the inner column 42 and the plug 44, so as to provide a resilient preload that makes the inner column 42 move toward the pressure-holding position. The tab 46 is inserted into the receiving hole 425 of the inner column 42 through the slot 415 of the outer tube 41.

With the components and configuration described previously, the air reservoir 100 according to the first preferred embodiment of the present invention is operated as below.

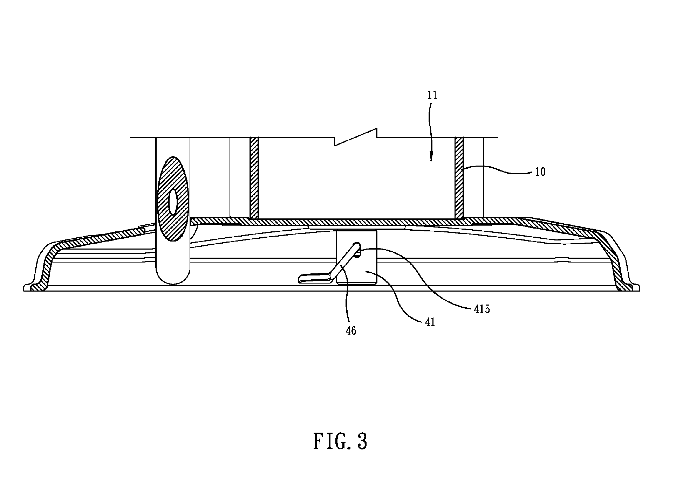

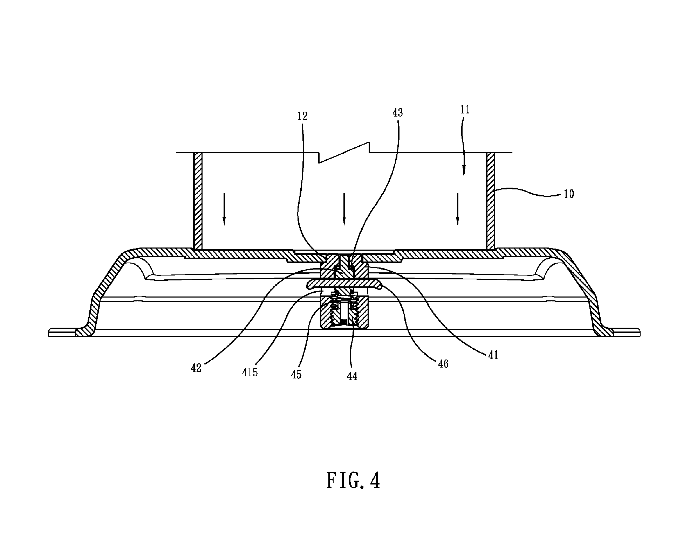

When the air pressure in the air-storage chamber 11 of the reservoir body 10 is normal, the spring 45 has its resilience greater than the air pressure in the air-storage chamber 11, so the resilience of the spring 45 pushes the inner column 42 toward the pressure-holding position, as shown in FIG. 3 and FIG. 4. As a result, the airtight member 43 abuts and seals between the stepped wall 413 of the outer tube 41 and the stepped segment 423 of the inner column 42 to form a seal condition. At this time, the air in the air-storage chamber 11 is prevented from flowing out through the exhaust hole 12, and is well stored.

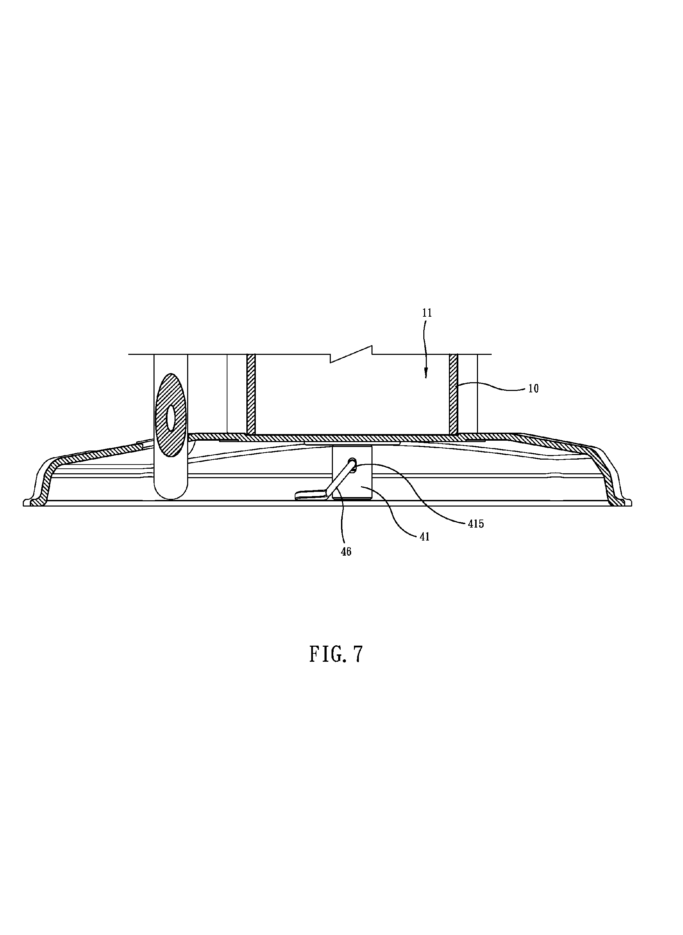

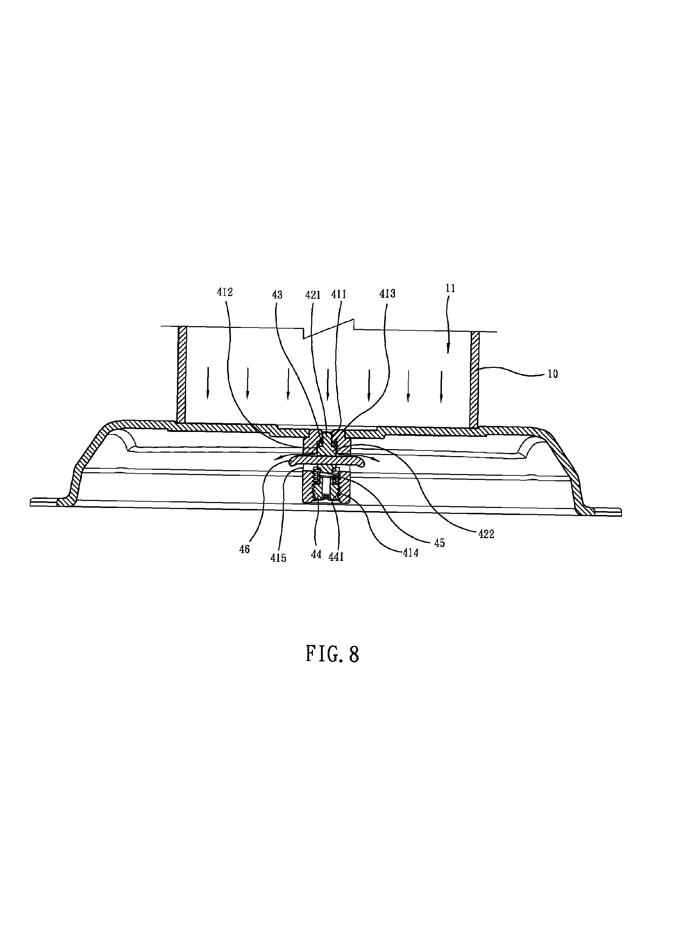

When the air pressure in the air-storage chamber 11 of the reservoir body 10 is excessively high to the extent that it becomes greater than the resilience of spring 45, the air pressure in the air-storage chamber 11 surpasses the resilience of the spring 45 and pushes the inner column 42 from the pressure-holding position to the pressure-relief position, as shown in FIG. 7 and FIG. 8. As a result, the airtight member 43 on the inner column 42 does not abut against the stepped wall 413 of the outer tube 41 anymore. In other words, the airtight member 43 is separated from the stepped wall 413 of the outer tube 41. Consequently, the air and some water in the air-storage chamber 11 naturally flow out along the exhaust hole 12, the diametrically-small channel 411 and the diametrically-large channel 412 of the outer tube 41, and finally leak out through the gap between the slot 415 or the plug 44 and the outer tube 41, so as to achieve automatic adjustment of air pressure in the air-storage chamber 11 and automatic water drainage. Once the air pressure in the air-storage chamber 11 returns to normal, the resilience of the spring 45 becomes greater than the air pressure in the air-storage chamber 11 again and pushes the inner column 42 toward the pressure-holding position, as shown in FIG. 3 and FIG. 4. As a result, the airtight member 43 abuts and seals between the stepped wall 413 of the outer tube 41 and the stepped segment 423 of the inner column 42 to form the seal condition again. At this time, the air in the air-storage chamber 11 is prevented from flowing out through the exhaust hole 12.

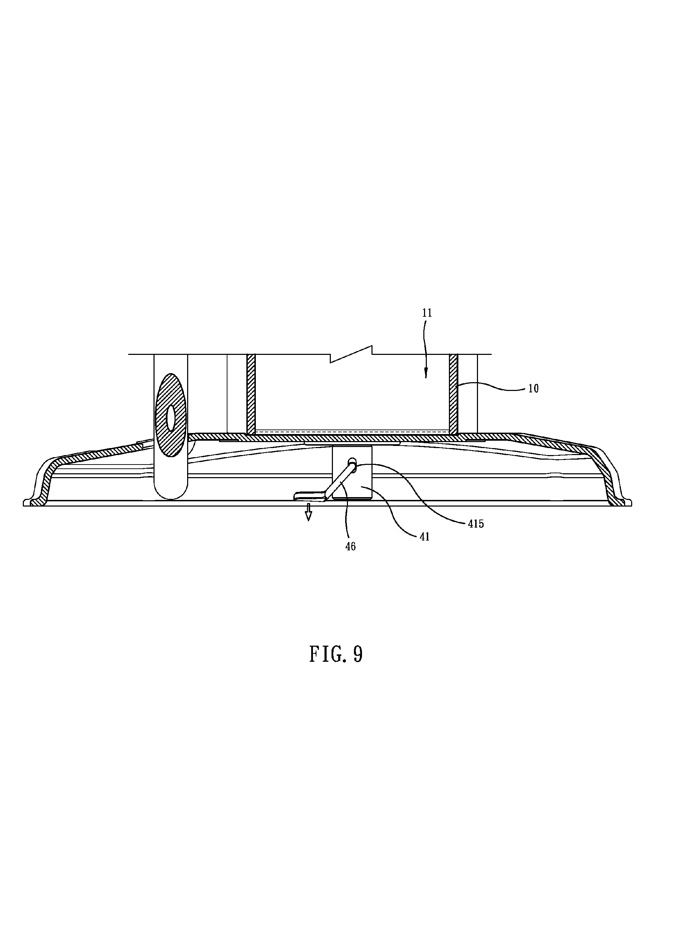

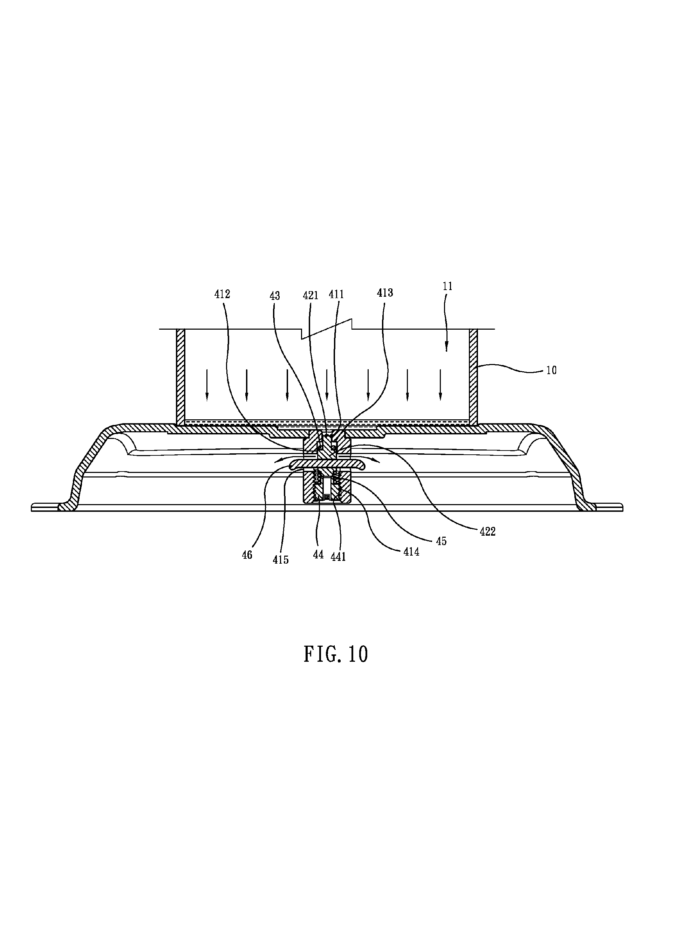

When there is more water in the air-storage chamber 11 to be drained out, a user manually pulls the tab 46, so as to drive the inner column 42 to move from the pressure-holding position to the pressure-relief position, as shown in FIG. 9 and FIG. 10. As a result, the airtight member 43 on the inner column 42 does not abut against the stepped wall 413 of the outer tube 41. In other words, the airtight member 43 is separated from the stepped wall 413 of the outer tube 41. Thereby, the water in the air-storage chamber 11 flows along the exhaust hole 12, the diametrically-small channel 411 and the diametrically-large channel 412 of the outer tube 41, and finally leaks out through the gap formed between the slot 415 or the plug 44 and the outer tube 41, so as to achieve manual water drainage for the air-storage chamber 11. For preventing excessive pressure relief through the exhaust hole 12 during water drainage, the user can easily release the tab 46, so that the resilience of the spring 45 pushes the inner column 42 toward the pressure-holding position, where the airtight member 43 abuts and seals between the stepped wall 413 of the outer tube 41 and the stepped segment 423 of the inner column 42. At this time, the air in the air-storage chamber 11 is prevented from leaking out through the exhaust hole 12.

Thereby, the present invention supports automatic adjustment (pressure relief) of the air pressure in the air-storage chamber 11, so as to prevent damage caused by overpressure in the air-storage chamber 11, and in turn lengthen the service time. Furthermore, the present invention also supports manual operation for pressure relief and water drainage. The operation can be easily performed by pulling the tab 46, and is thus very simple. After pressure relief and water drainage, the exhaust hole 12 can be fast closed to prevent excessive air leakage by releasing the tab 46 that allows the resilience of the spring 45 to push the inner column 42 to the pressure-holding position.

While the air-supply device as described above includes the input unit supplying external air to the air-storage chamber and the output unit outputting the high-pressure air from the air-storage chamber, in other embodiments, the air-supply device may be integrated into a unity that serves to both input and output high-pressure air.

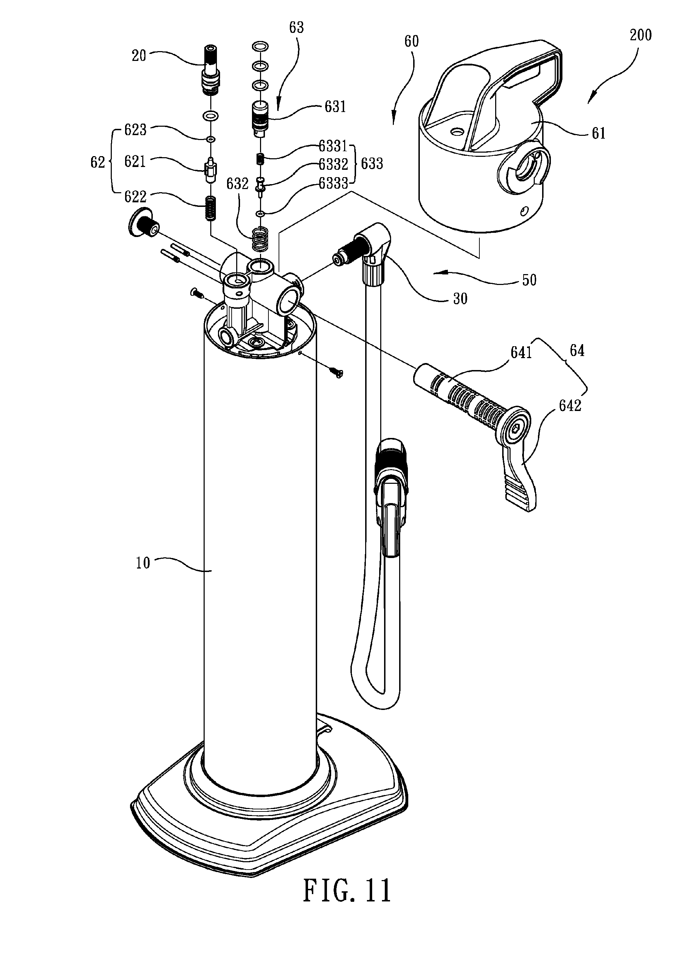

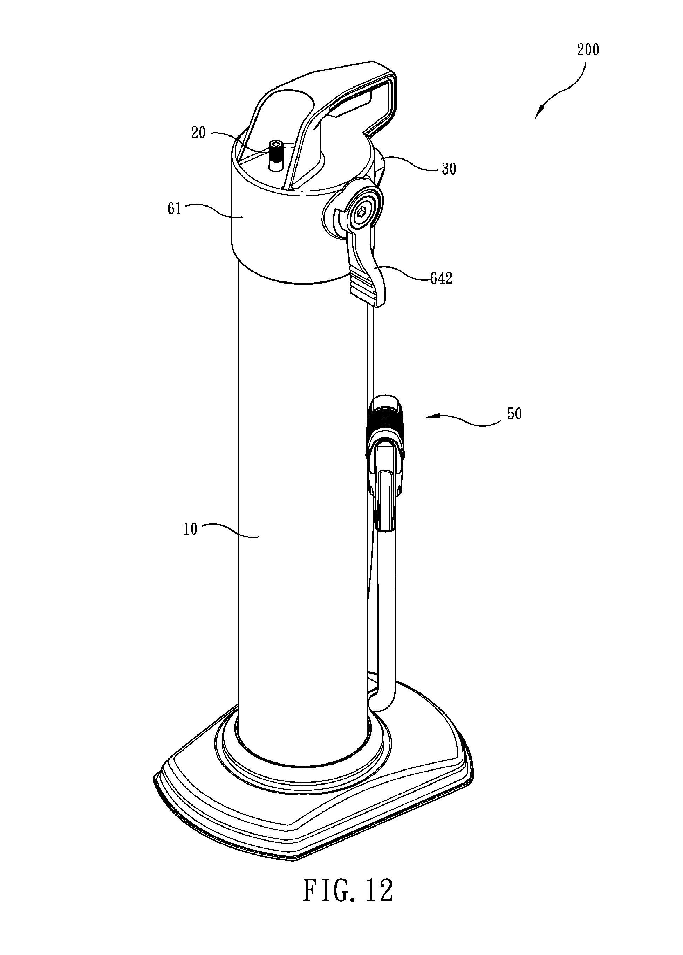

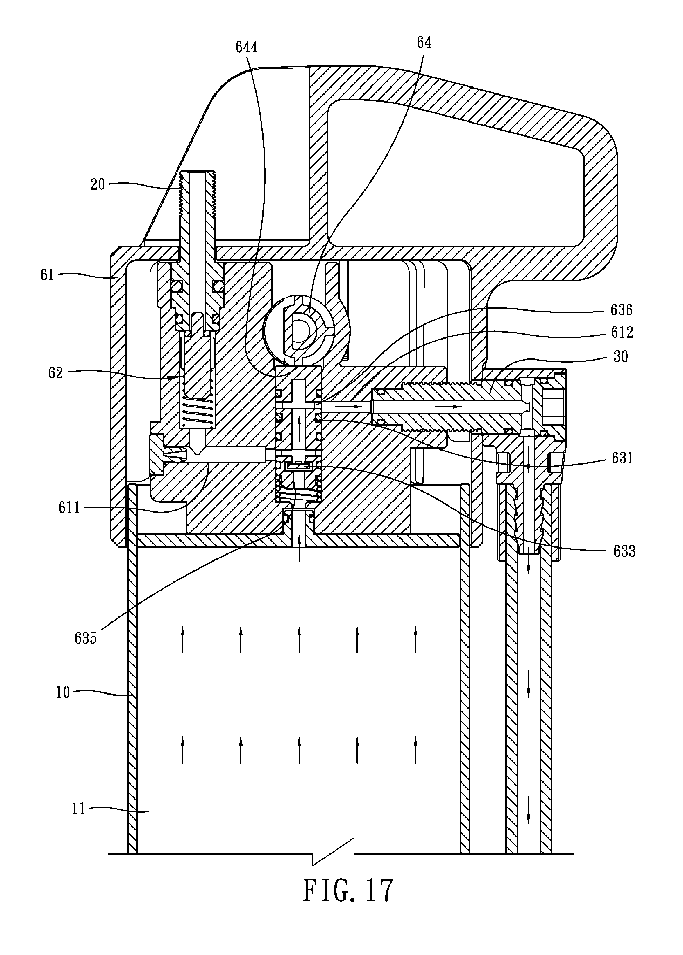

Referring to FIG. 11 through FIG. 17, in the second preferred embodiment of the present invention, an air reservoir 200 similarly has a reservoir body 10, an air-supply device 50, and a pressure-relief device (not shown), and further comprises a control device 60.

Referring to FIG. 11 through FIG. 13, the control device 60 has a valve seat 61, a check valve 62, and a control valve 63.

The valve seat 61 is combined with the reservoir body 10 for canying the input unit 20 and the output unit 30 of the air-supply device 50. The valve seat 61 contains therein an input channel 611 that communicates the air-storage chamber 11 of the reservoir body 10 with the input unit 20. The valve seat 61 contains therein an output channel 612 that communicates the air-storage chamber 11 with the output unit 30. The input channel 611 and the output channel 612 are communicated with each other.

The check valve 62 is installed in the input channel 611 for preventing the air air-storage chamber 11 from leaking into the input unit 20. The check valve 62 has a check-valve plunger 621, a check-valve spring 622, and a check-valve airtight member 623. The check-valve plunger 621 is received in the input channel 611, and when receiving an external force, performs to-and-fro displacement between a close position and a transmission position. The check-valve spring 622 abuts and seals between one end of the check-valve plunger 621 and a wall of the input channel 611, so as to provide a resilient preload that makes the check-valve plunger 612 move toward the close position. The check-valve airtight member 623 is arranged at an opposite end of the check-valve plunger 621. When the check-valve plunger 612 is at the close position, the check-valve airtight member 623 abuts against the input unit 20, so that the air in the air-storage chamber 11 is prevented from leaking out through the input unit.

The control valve 63 has a control valve plunger 631, a control spring 632, a control valve core 633, and a control lever 64. The control valve plunger 631 is arranged between the input channel 611 and the output channel 612 of the valve seat 61, and when receiving an external force, performs to-and-fro displacement between an input position and an output position. The control valve plunger 631 has an input runner 635 and an output runner 636. The control spring 632 abuts and seals between one end of the control valve plunger 631 and the wall of the input channel 611, so as to provide a resilient preload that makes the control valve plunger 631 move toward input position. The control valve core 633 is received in the input runner 635, and when receiving an external force, performs to-and-fro displacement between a lower seal position and an upper open position. The control valve core 633 has a valve-core stem 6331, a valve-core spring 6332, and a valve-core airtight member 6333. The valve-core stem 6331 is received in the input runner 635. The valve-core spring 6332 abuts and seals between one end of the valve-core stem 6331 and the control valve plunger 631, so as to provide a spring preload that makes the valve-core stem 6331 move toward the lower seal position. The valve-core airtight member 6333 is combined to an opposite end of the valve-core stem 6331, so that when the valve-core stem 6331 is at the lower seal position, the valve-core airtight member 6333 closes the input runner 635. The control lever 64 has a pivot portion 641 and a turning portion 642 that is perpendicularly connected to the pivot portion 641. The pivot portion 641 is pivotally inserted into the valve seat 61, with the turning portion 642 left outside the valve seat 61 for a user to operate. The pivot portion 641 has a receiving portion 643 and a driving portion 644.

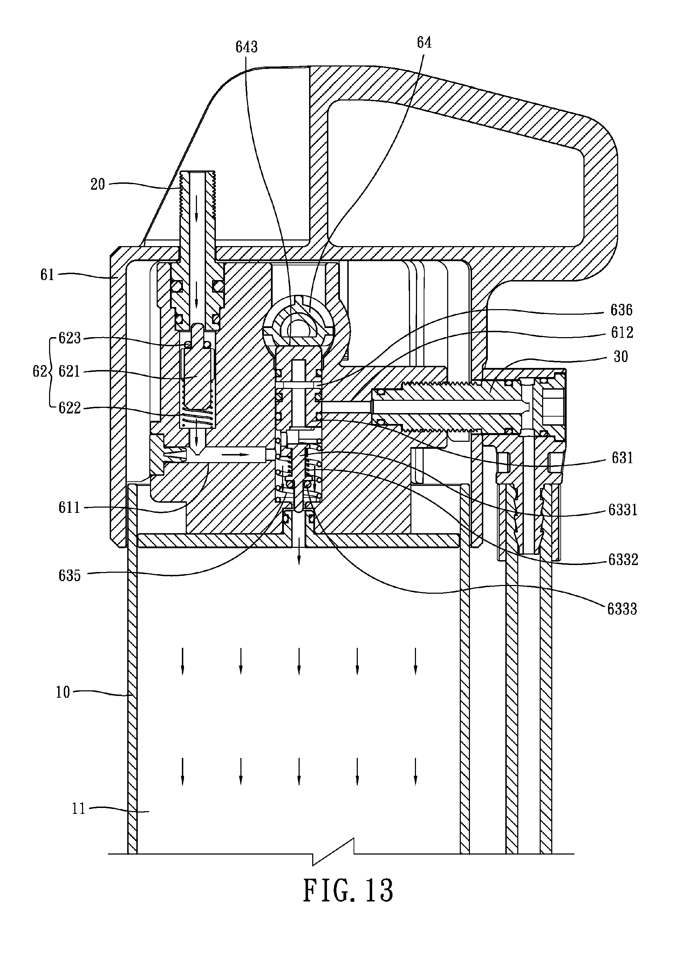

For inputting air to the air-storage chamber 11 through the input unit 20, referring to FIG. 13, the control lever 64 is first rotated, so that the receiving portion 643 abuts against the control valve plunger 631, making the control valve plunger 631 arrive at the input position. At this time, the output runner 636 and the output channel 612 are not communicated with each other, so air can be input to the air-storage chamber 11 through the input unit 20 for storage.

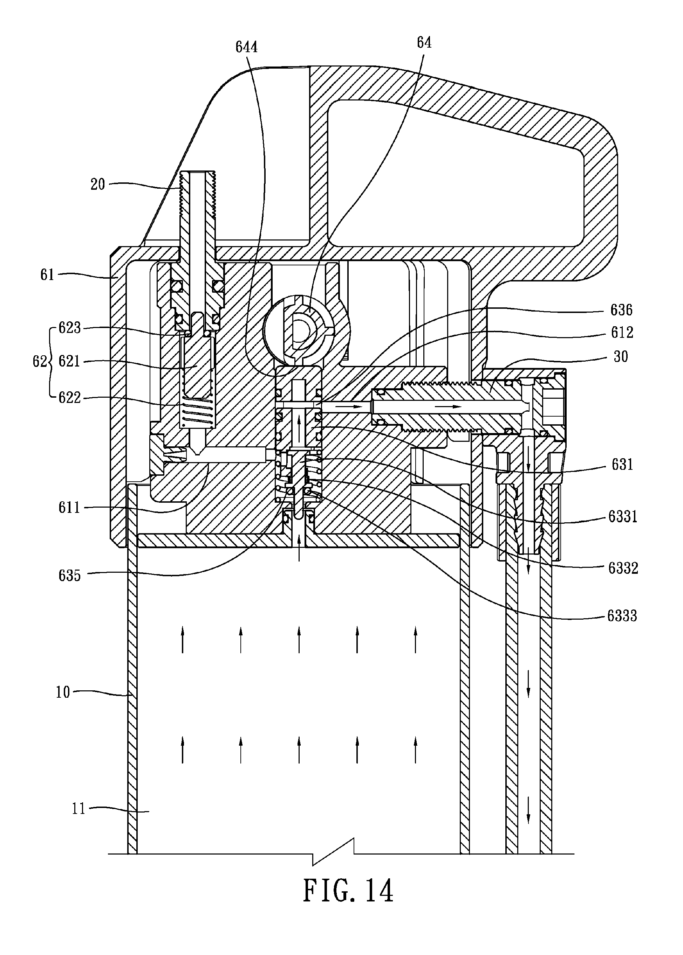

For outputting the air in the air-storage chamber 11 to the output unit 30, referring to FIG. 14, the control lever 64 is first rotated so that the driving portion 644 abuts against the control valve plunger 631, making the control valve plunger 631 arriving at the output position. At this time, the output runner 636 and the output channel 612 are communicated with each other, so that air in the air-storage chamber 11 can be delivered to the output unit 30.

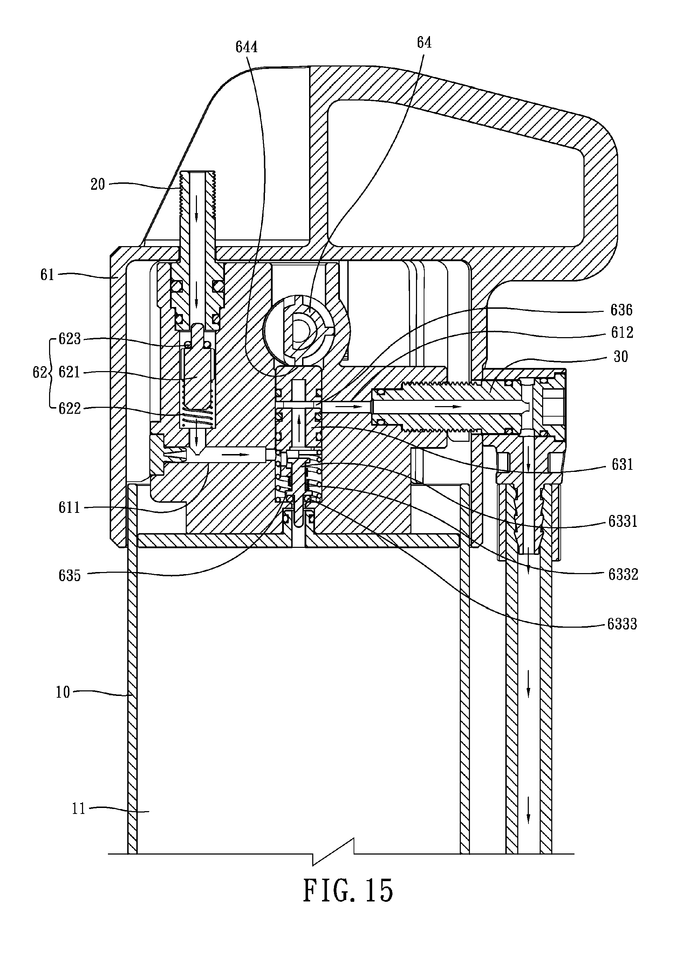

Moreover, when there is no air in the air-storage chamber 11 to be input to the output unit 30, it is possible to use the input unit 20 to directly supply air to the output unit 30, as shown in FIG. 15. For doing so, the control lever 64 is first rotated to let the driving portion 644 abut against the control valve plunger 631, so that the control valve plunger 631 is at the output position. At this time, the output runner 636 and the output channel 612 are communicated with each other, so the air input through the input unit 20 drives the control valve core 633 to move toward the lower seal position, so as to seal the input runner 635, thereby preventing air from flowing into the air-storage chamber 11. In this manner, the air input through the input unit 20 is delivered to the output unit 30.

Hence, the present invention uses the control device 60 to switch air transmission, so as to be more versatile and functional.

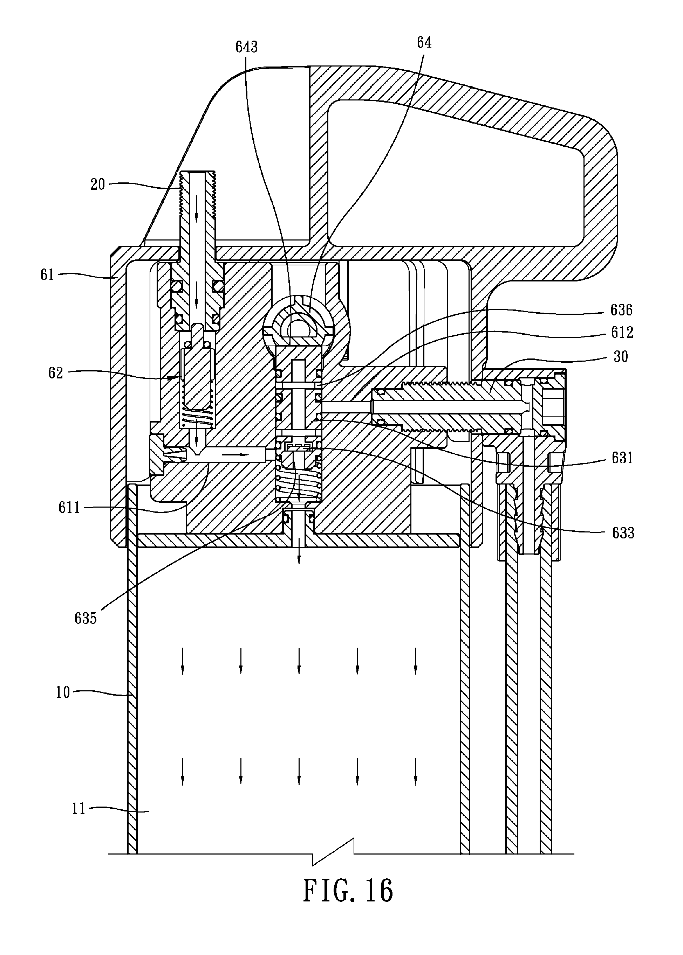

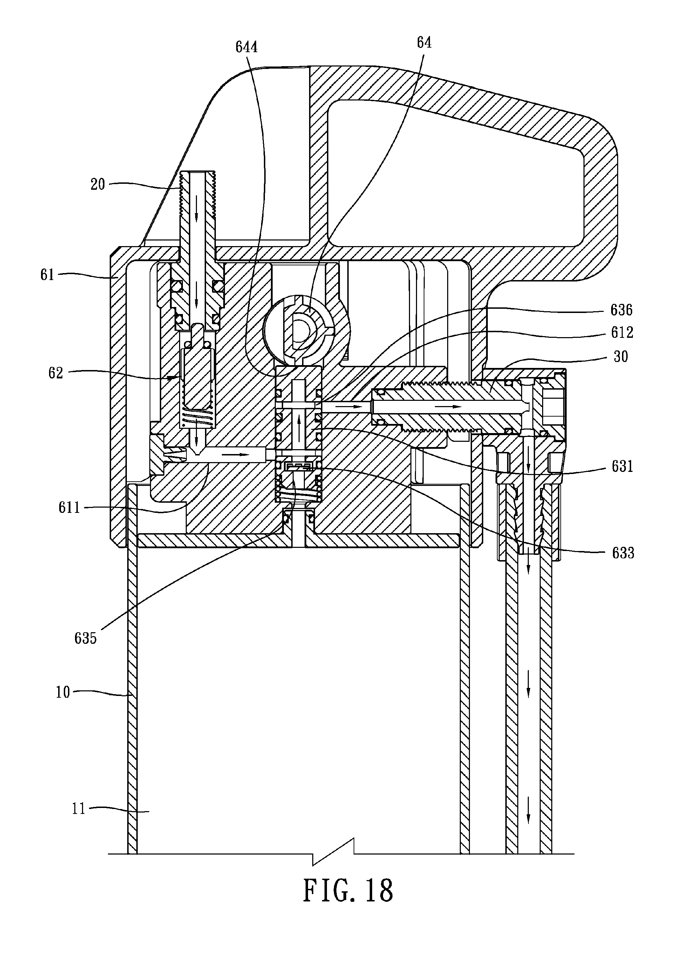

Additionally, as shown in FIG. 16 through FIG. 18, the control valve core 633 disclosed in the present invention may alternatively be a thin sheet the functions similarly.

The present invention has been described with reference to the preferred embodiments and it is understood that the embodiments are not intended to limit the scope of the present invention. Moreover, as the contents disclosed herein should be readily understood and can be implemented by a person skilled in the art, all equivalent changes or modifications which do not depart from the concept of the present invention should be encompassed by the appended claims.

### Reference Number

### (The first preferred embodiment)

- 100: air reservoir
- 10: reservoir body
- 11: air-storage chamber
- 12: exhaust hole
- 20: input unit
- 21: valve
- 30: output unit
- 31: air pipe
- 32: air chuck
- 40: pressure-relief device
- 41: outer tube
- 411: diametrically-small channel
- 412: diametrically-large channel
- 413: stepped wall
- 414: internally threaded portion
- 415: slot
- 42: inner column
- 421: diametrically-small segment
- 422: diametrically-large segment
- 423: stepped segment
- 424: depressed accommodating area
- 425: receiving hole
- 43: airtight member
- 44: plug
- 441: externally threaded portion
- 45: spring
- 46: tab
- 50: air-supply device

### (The second preferred embodiment)

- 200: air reservoir
- 10: reservoir body
- 11: air-storage chamber
- 20: input unit
- 30: output unit
- 50: air-supply device
- 60: control device
- 61: valve seat
- 611: input channel
- 612: output channel
- 62: check valve
- 621: check-valve plunger
- 622: check-valve spring
- 623: check-valve airtight member
- 63: control valve
- 631: control valve plunger
- 632: control spring
- 633: control valve core
- 6331: valve-core stem
- 6332: valve-core spring
- 6333: valve-core airtight member
- 635: input runner
- 636: output runner
- 64: control lever
- 641: pivot portion
- 642: turning portion
- 643: receiving portion
- 644: driving portion

## Claims

1. An air reservoir, comprising:
a reservoir body, defining therein an air-storage chamber for storing a high-pressure air, the reservoir body having an exhaust hole for communicating the air-storage chamber to the exterior;
an air-supply device, being mounted on the reservoir body for transmitting the high-pressure air into the air-storage chamber; and
a pressure-relief device, having an outer tube, an inner column, a spring and a tab; the outer tube having one end connected to the exhaust hole of the reservoir body and being formed with a slot, the inner column being received in the outer tube and configured to perform to-and-fro linear displacement between a pressure-holding position and a pressure-relief position upon receiving an external force, the spring abutting against the inner column so as to provide a resilient preload that makes the inner column move toward the pressure-holding position, the tab being linked to the inner column so that the inner column is driven by the tab;
whereby when the inner column is at the pressure-holding position, the exhaust hole is closed, so as to prevent the air stored in the air-storage chamber from leaking out, and when the inner column is at the pressure-relief position, the exhaust hole is open, so that the air and water in the air-storage chamber are exhausted from the exhaust hole.

2. The air reservoir of claim 1, wherein the air-supply device has an input unit and an output unit, the input unit being a valve deposited on the reservoir body for supplying external air into the air-storage chamber, the output unit being deposited on the reservoir body for outputting the high-pressure air from the air-storage chamber, the output unit having an air pipe that has one end combined and communicated with the air-storage chamber and an air chuck connected to an opposite end of the air pipe.

3. The air reservoir of claim 1, wherein the pressure-relief device further has an airtight member and a plug; the outer tube having one end formed with a diametrically-small channel axially extending inward and an opposite end formed with a diametrically-large channel axially extending inward and being communicated with the diametrically-small channel so that a stepped wall is formed at where the diametrically-small channel and the diametrically-large channel adjoin each other, the slot of the outer tube being radially formed and communicated with the diametrically-large channel so that the exhaust hole and the diametrically-small channel communicated with each other, the inner column having a diametrically-small segment and a diametrically-large segment that is connected to the diametrically-small segment so that a stepped segment is formed at where the diametrically-small segment and the diametrically-large segment adjoin each other, the diametrically-small segment being received in the diametrically-small channel, the diametrically-large segment being received in the diametrically-large channel, the airtight member abutting against the stepped segment of the inner column, the plug being inserted into the diametrically-large channel of the outer tube, the spring abutting between the diametrically-large segment of the inner column and the plug, whereby when the inner column is at the pressure-holding position, the airtight member abuts and seals between the stepped segment of the inner column and the stepped wall of the outer tube, so as to prevent the air in the air-storage chamber from leaking out, and when the inner column is at the pressure-relief position, the airtight member is separated from the stepped wall of the outer tube, so that the air in the air-storage chamber is allowed to come out through the exhaust hole.

4. The air reservoir of claim 3, wherein the slot of the outer tube is a lengthwise hole and the diametrically-large segment of the inner column is radially formed with a receiving hole, so that the tab is inserted into the receiving hole of the inner column through the slot of the outer tube for driving the inner column.

5. A pressure-relief device for an air reservoir, the relief device comprising:
an outer tube, being radially formed with an exhaust hole;
an inner column, being received in the outer tube and performing to-and-fro linear displacement between a pressure-holding position and a pressure-relief position upon receiving an external force;
a spring, abutting against the inner column, so as to provide a resilient preload that makes the inner column move toward the pressure-holding position; and
a tab, being linked to the inner column so that the inner column is driven by the tab;
whereby when the inner column is at the pressure-holding position, the exhaust hole is closed, and when the inner column is at the pressure-relief position, the exhaust hole is open.

6. The pressure-relief device of claim 5, wherein the pressure-relief device further has an airtight member and a plug; the outer tube having one end formed with a diametrically-small channel axially extending inward and an opposite end formed with a diametrically-large channel axially extending inward and being communicated with the diametrically-small channel so that a stepped wall is formed at where the diametrically-small channel and the diametrically-large channel adjoin each other, the slot of the outer tube being radially formed and communicated with the diametrically-large channel, the inner column having a diametrically-small segment and a diametrically-large segment connected to the diametrically-small segment so that a stepped segment is formed at where the diametrically-small segment and the diametrically-large segment adjoin each other, the diametrically-small segment being received in the diametrically-small channel, the diametrically-large segment being received in the diametrically-large channel, the airtight member abutting against the stepped segment of the inner column, the plug being inserted into the diametrically-large channel of the outer tube, the spring abutting between the diametrically-large segment of the inner column and the plug; whereby when the inner column is at the pressure-holding position, the airtight member abuts and seals between the stepped segment of the inner column and the stepped wall of the outer tube, and when the inner column is at the pressure-relief position, the airtight member is separated from the stepped wall of the outer tube.

7. The pressure-relief device of claim 6, wherein the slot of the outer tube is a lengthwise hole and the diametrically-large segment of the inner column is radially formed with a receiving hole, so that the tab is inserted into the receiving hole of the inner column through the slot of the outer tube for driving the inner column.

8. An air reservoir, comprising:
a reservoir body, defining therein an air-storage chamber for storing high-pressure air;
an air-supply device, being mounted on the reservoir body for transmitting the high-pressure air into the air-storage chamber, and having an input unit and an output unit; and
a control device, having a valve seat, a check valve and a control valve, the valve seat being combined with the reservoir body for carrying the input unit and the output unit, the valve seat having an input channel communicating the air-storage chamber with the input unit and an output channel communicating the air-storage chamber with the output unit, the input channel and the output channel being communicated with each other, the check valve being installed in the input channel for preventing the air in the air-storage chamber from leaking out to the input unit, the control valve having a control valve plunger, a control spring, a control valve core and a control lever, the control valve plunger being deposited between the input channel and the output channel of the valve seat so as to perform to-and-fro displacement between an input position and an output position upon receiving an external force, the control valve plunger having an input runner and an output runner, the control spring abutting and sealing between one end of the control valve plunger and a wall of the input channel, so as to provide a resilient preload that makes the control valve plunger move toward the input position, the control valve core being installed in the input runner so as to to-and-fro displacement between a lower seal position and an upper open position upon receiving an external force, so that when the control valve core is at the lower seal position, the input runner is closed, the control lever being pivotally inserted into the valve seat and having a receiving portion and a driving portion;
whereby when the receiving portion abuts against the control valve plunger, the control valve plunger is at the input position, and the output runner and the output channel are not communicated with each other, so that air is allowed to be input to the air-storage chamber through the input unit for storage, and when the driving portion abuts against the control valve plunger, the control valve plunger is at the output position, and the output runner and the output channel are communicated with each other, so that the air in the air-storage chamber is allowed to be output to the output unit, and when the driving portion abuts against the control valve plunger, the control valve plunger is at the output position, and the output runner and the output channel are communicated with each other, so that air input through the input unit drives the control valve core to move toward the lower seal position, so as to close the input runner and prevent the air from flowing into the air-storage chamber, thereby outputting the air input through the input unit to the output unit.

9. The air reservoir of claim 8, wherein the check valve has a check-valve plunger, a check-valve spring and a check-valve airtight member, the check-valve plunger being received in the input channel so as to perform to-and-fro displacement between a close position and a transmission position upon receiving an external force, the check-valve spring abutting and sealing between one end of the check-valve plunger and a wall of the input channel, so as to provide a resilient preload that makes the check-valve plunger move toward the close position, the check-valve airtight member being deposited on an opposite end of the check-valve plunger, whereby when the check-valve plunger is at the close position, the check-valve airtight member abuts against the input unit, and the air in the air-storage chamber is prevented from leaking out through the input unit.

10. The air reservoir of claim 8, wherein the control valve core having a valve-core stem, a valve-core spring and a valve-core airtight member, the valve-core stem being received in the input runner, the valve-core spring abutting and sealing between one end of the valve-core stem and the control valve plunger, so as to provide a spring preload that makes the valve-core stem move toward the lower seal position, the valve-core airtight member being combined with an opposite end of the valve-core stem.

11. The air reservoir of claim 8, wherein the control lever having a pivot portion and a turning portion that is perpendicularly connected to the pivot portion, the pivot portion being pivotally inserted into the valve seat, the receiving portion and the driving portion being formed on the pivot portion, the turning portion being formed outside the valve seat for a user to operate.

12. The air reservoir of claim 8, further comprising a pressure-relief device; the reservoir body having an exhaust hole; the pressure-relief device, having an outer tube, an inner column, a spring and a tab; the outer tube having one end connected to the exhaust hole of the reservoir body and being formed with a slot, the inner column being received in the outer tube and configured to perform to-and-fro linear displacement between a pressure-holding position and a pressure-relief position upon receiving an external force, the spring abutting against the inner column so as to provide a resilient preload that makes the inner column move toward the pressure-holding position, the tab being linked to the inner column so that the inner column is driven by the tab; when the inner column is at the pressure-holding position, the exhaust hole is closed, so as to prevent the air in the air-storage chamber from leaking out, and when the inner column is at the pressure-relief position, the exhaust hole is open, so that the air and water in the air-storage chamber are exhausted from the exhaust hole.

13. The air reservoir of claim 12, wherein the pressure-relief device further has an airtight member and a plug; the outer tube having one end formed with a diametrically-small channel axially extending inward and an opposite end formed with a diametrically-large channel axially extending inward and being communicated with the diametrically-small channel so that a stepped wall is formed at where the diametrically-small channel and the diametrically-large channel adjoin each other, the slot of the outer tube being radially formed and communicated with the diametrically-large channel so that the exhaust hole and the diametrically-small channel communicated with each other, the inner column having a diametrically-small segment and a diametrically-large segment connected to the diametrically-small segment so that a stepped segment is formed at where the diametrically-small segment and the diametrically-large segment adjoin each other, the diametrically-small segment being received in the diametrically-small channel, the diametrically-large segment being received in the diametrically-large channel, the airtight member abutting against the stepped segment of the inner column, the plug being inserted into the diametrically-large channel of the outer tube, the spring abutting between the diametrically-large segment of the inner column and the plug, whereby when the inner column is at the pressure-holding position, the airtight member abuts and seals between the stepped segment of the inner column and the stepped wall of the outer tube so as to prevent the air in the air-storage chamber from leaking out, and when the inner column is at the pressure-relief position, the airtight member is separated from the stepped wall of the outer tube so that the air in the air-storage chamber is allowed to leak out through the exhaust hole.

14. The air reservoir of claim 13, wherein the stepped segment of the inner column has a depressed accommodating area for receiving the airtight member.

15. The air reservoir of claim 13, wherein the slot of the outer tube is a lengthwise hole and the diametrically-large segment of the inner column is radially formed with a receiving hole, so that the tab is inserted into the receiving hole of the inner column through the slot of the outer tube for driving the inner column.
